(19) Europäisches Patentamt
European Patent Office
Office européen des brevets

(11) **EP 2 597 280 B1**

(12) **EUROPÄISCHE PATENTSCHRIFT**

(45) Veröffentlichungstag und Bekanntmachung des Hinweises auf die Patenterteilung:
**08.07.2015   Patentblatt 2015/28**

(51) Int Cl.:
**F23J 15/08** *(2006.01)*      **F23C 13/00** *(2006.01)*
**F01N 3/20** *(2006.01)*      **F23C 99/00** *(2006.01)*

(21) Anmeldenummer: **12007816.7**

(22) Anmeldetag: **20.11.2012**

(54) **Wärmetauscher sowie Anordnung eines Wärmetauschers in einem Abgaskanal einer Brennkraftmaschine**

Heat exchanger and arrangement of a heat exchanger in an exhaust gas line of an internal combustion engine

Échangeur de chaleur ainsi que l'agencement d'un échangeur de chaleur dans une ligne d'échappement d'un moteur à combustion interne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.11.2011   DE 102011119162**

(43) Veröffentlichungstag der Anmeldung:
**29.05.2013   Patentblatt 2013/22**

(73) Patentinhaber: **MAN Truck & Bus AG**
**80995 München (DE)**

(72) Erfinder: **Döring, Andreas**
**82008 München (DE)**

(56) Entgegenhaltungen:
**EP-A2- 0 716 263      DE-U1-202007 001 754**
**JP-A- S 603 422      US-A- 4 104 018**

**Beschreibung**

Die Erfindung betrifft einen Wärmetauscher nach dem Oberbegriff des Patentanspruchs 1 sowie eine Anordnung eines Wärmetauschers in einem Abgaskanal einer Brennkraftmaschine, insbesondere einer Brennkraftmaschine eines Fahrzeuges, nach dem Oberbegriff des Patentanspruches 15.

Bei herkömmlichen Wärmetauschern erhitzt ein primärseitiges Medium mit hoher Temperatur ein sekundärseitiges Medium durch Wärmeübertragung von der Primärseite zur Sekundärseite. Je nach Anwendungsbereich können die Wärmetauscher sehr unterschiedlich aufgebaut sein, wobei in der Regel für das primärseitige Medium und das sekundärseitige Medium strömungstechnisch getrennte Strömungskreisläufe vorgesehen sind.

Aus der DE 10 2004 049 903 A1 ist ein Wärmetauscher bekannt, der mit einem Porenbrenner kombiniert ist. Der Brennraum des Porenbrenners ist von einem Porenkörper ausgefüllt, dem eine Verdampfungszone zur Verdampfung von zugeführtem Brennstoff vorgelagert ist. Außerdem ist eine Zündeinrichtung zur Zündung des zugeführten brennbaren Gasgemisches vorgesehen. Durch eine Oxidation bzw. Verbrennung des brennbaren Gasgemischs im Porenbrenner wird dieser stark erhitzt und das ausströmende Heißgas durchströmt die Primärseite des nachgeschalteten Wärmetauschers.

Aus der WO 98/21523 ist ebenfalls ein Wärmetauscher mit direkt angrenzendem Porenbrenner bekannt, wobei ebenfalls aus dem Porenbrenner ausströmendes Heißgas den Wärmetauscher durchströmt.

JP S60 3442 A lehrt einen katalytischen Brenner mit gitterförmigen Fluidkanälen die übereinander angeordnet sind wobei ein Teil der Fluidkanälen mit einem katalytischen Träger versehen sind.

DE 20 2007 001 754 U1 beschreibt ein Abgassystem eines Verbrennungsmotors wobei das Abgassystem einen Rußfilter umfasst und eine innere Einrichtung zum Erhitzen der Abgase stromaufwärts des Rußfilters vorgesehen ist. Die innere Einrichtung umfasst einen Wärmetauscher sowie einen mit Brennstoff betriebenen Brenner wobei das Abgassystem derart ausgestaltet ist, dass die Abwärme der Verbrennungsgase des Brenners an die Abgase des Verbrennungsmotors übertragbar ist.

Die bekannten Porenbrenner besitzen eine Schaumstruktur mit größeren und kleineren Poren, so dass sich innerhalb dieser Struktur entsprechend größere und kleinere Strömungsquerschnittsflächen ergeben. Damit entstehen in dem, gegebenenfalls aus einem katalytischen Material bestehenden Porenkörper zündfähige und nicht zündfähige Bereiche, in denen das durchströmende brennbare Gemisch sich entzünden bzw. nicht entzünden kann. Bereiche mit sehr kleinen Strömungsquerschnittsflächen ergeben eine größere Wärmeabführung an das Material als die durch die Reaktion gebildete Wärme, so dass es hier zu keiner Entzündung eines durchströmenden Brennstoff-Luft-Gemischs kommt. In anderen Bereichen, wo die Strömungsquerschnittsflächen so groß sind, dass in diesen Bereichen die Wärmeabführung an das Material kleiner ist als die durch die Reaktion gebildete Wärme, kommt es zur Entzündung des Brennstoff-Luft-Gemischs. Diese Zusammenhänge lassen sich durch die so genannte modifizierte Pecletzahl PE gemäß nachfolgender Gleichung beschreiben:

$$PE = S \cdot d \cdot c_p \cdot \rho / \lambda$$

wobei

S = laminare Flammengeschwindigkeit
D = Kanaldurchmesser
$c_p$ = Wärmekapazität
p = Gasdichte
A = Wärmeleitfähigkeit des Gases

Bei Werten von ca. PE < 65 erlöscht eine vorhandene Flamme bzw. ist es nicht möglich, eine Entzündung des Gemischs herbeizuführen, während bei Werten von ca. PE > 65 ein Entzünden des Brennstoff-Luft-Gemisches bzw. eine Oxidation des Brennstoffs möglich ist.

Die bei den bekannten Porenbrennern verwendeten Porenkörper besitzen eine unregelmäßige innere Schaumstruktur mit völlig unregelmäßigen Porengrößen mit ebenso unregelmäßigen Porenwänden. Dadurch ergeben sich lokal sehr stark unterschiedliche Wärmeleitungs- bzw. Wärmeübertragungseigenschaften und Strömungsverhältnisse, wodurch es einerseits zu undefinierten Betriebsbereichen und großen lokalen Wärmespannungen kommt. Die undefinierten Betriebsbereiche haben zur Folge, dass ungleichmäßig verteilt im Porenkörper Bereiche mit hoher Zündfähigkeit vorhanden sein können, die dann eine besonders hohe lokale Wärmebelastung innerhalb des Porenkörpers zur Folge haben. Andererseits können aber auch größere Bereiche mit besonders kleinen Poren dazu führen, dass dort das durchströmende Gas nicht zünden kann. Auftretende lokale Wärmespannungen führen dabei oftmals zu Beschädigungen der Schaumstruktur. Außerdem ist bei Porenbrennern die hohe lokale Temperatur im Gaseintrittsbereich der Schaumstruktur problematisch und kann bei Überbelastung zum Schmelzen der Schaumstruktur im Gaseintrittsbereich führen. Außerdem sind derartige Porenbrenner wegen der geringen mechanischen Stabilität der darin verwendeten Schaumstrukturen für den Einsatz in Kraftfahrzeugen eher nicht geeignet.

Die bekannten Porenbrenner mit zugeordnetem Wärmetauscher sind diesem in Strömungsrichtung vorangestellt. Eine direkte thermische Kopplung zwischen dem Porenkörper und dem angrenzenden Wärmetauscher ist nur im Bereich der Gasaustrittsfläche des Porenkörpers gegeben.

Der Erfindung liegt die Aufgabe zugrunde, einen Wärmetauscher zu schaffen, der in Verbindung mit einer Brennervorrichtung eine möglichst gute thermische Kopplung zwischen einem primärseitigen und einem sekundärseitigen Medium aufweist.

Die Lösung dieser Aufgabe erhält man mit den Merkmalen des Patentanspruchs 1. Bevorzugte Weiterbildungen der Erfindung sind in den Unteransprüchen offenbart.

Erfindungsgemäß bilden die primärseitigen Strömungskanäle des Wärmetauschers einen Brennraum einer Brennervorrichtung, der von einem Brennstoff-Luft-Gemisch oder einem anderen brennbaren Gemisch durchströmt wird. Dieses Gemisch oxidiert bzw. entzündet sich in dem Brennraum, so dass durch thermische Kopplung mit den sekundärseitigen Kanälen eine optimale Wärmeübertragung zu einem zu erhitzenden sekundärseitigen Medium erfolgt. Bei dem sekundärseitigen Medium kann es sich um das Abgas einer Brennkraftmaschine handeln, um so zum Beispiel eine Anhebung der Abgastemperatur zu erreichen, oder um Wasser zum Betrieb einer Dampfturbine oder um Brauchwasser oder um Luft oder ein anderes Gas, insbesondere zur Vorwärmung einer Hochtemperaturbrennstoffzelle und/oder eines Reformers. Durch die Integration der Brennervorrichtung in den Wärmetauscher bzw. die direkte thermische Kopplung zwischen den primärseitigen und sekundärseitigen Kanälen erhält man eine sehr effektive Wärmeübertragung und damit einen entsprechend hohen Wirkungsgrad.

Gemäß einer besonders bevorzugten Weiterbildung der Erfindung weisen die Strömungskanäle der Brennervorrichtung wenigstens an ihrer Oberfläche ein katalytisches Material, insbesondere Cer und/oder Nickel und/oder Palladium und/oder Platin und/oder Osmium und/oder Rhodium und/oder Iridium und/oder Gold und/oder Silber, auf, welches das durchströmende brennbare Gemisch wenigstens in Teilbereichen der Brennervorrichtung in den Strömungskanälen entzündet bzw. dessen Oxidation begünstigt. Die Größe der Strömungskanäle kann hierfür so gewählt werden, dass eine vollständige oder möglichst vollständige Verbrennung des hindurchströmenden Gemischs in den Strömungskanälen erfolgt.

Eine besonders gute thermische Kopplung erhält man dadurch, dass wenigstens ein Teil der Wände der primärseitigen Strömungskanäle wenigstens einen Teil der Wände der sekundärseitigen Kanäle bilden. Dabei kann der Wärmetauscher als Kreuzstromwärmetauscher ausgebildet sein, bei dem sich die primärseitigen Strömungskanäle der Brennervorrichtung mit den sekundärseitigen Kanälen abwechselnd übereinander oder nebeneinander kreuzen. Die primärseitigen und sekundärseitigen Kanäle können vorteilhaft zu einem Paket z. B. abwechselnd übereinander zusammengesetzt sein, wodurch sich eine sehr kompakte und unter thermischen Gesichtspunkten sehr vorteilhafte Gesamtanordnung ergibt.

Um eine gewünschte Wärmeverteilung innerhalb der gesamten Struktur des Wärmetauschers zu erreichen, kann ein Teil der Strömungskanäle der Brennervorrichtung einen so großen Strömungsquerschnitt haben, dass dort ein zündfähiger Bereich entsteht, während ein anderer Teil der Strömungskanäle so kleine Strömungsquerschnittsflächen haben kann, dass dort keine Entzündung des durchströmenden Gemischs erfolgt. Durch die Wahl unterschiedlicher Strömungsquerschnittsflächen können innerhalb der Struktur des Wärmetauschers zündfähige und nicht zündfähige Bereiche in einem gewünschten Maße gezielt so verteilt angeordnet werden, dass an keiner Stelle eine thermische Überlastung im Wärmetauscher auftritt.

Die zündfähigen Bereiche und die nichtzündfähigen Bereiche können dabei in der Brennervorrichtung in Strömungsrichtung des durchströmenden Gemischs nebeneinander und/oder hintereinander angeordnet sein, wobei beispielsweise die Abstände und die Größe der zündfähigen Bereiche von dem jeweiligen Anwendungsfall abhängen und individuell entsprechend gestaltet sein können.

Um eine optimale Verbrennung des brennbaren Gemischs zu erreichen und unerwünschte Emissionen sicher vermeiden zu können, kann der Brennervorrichtung ein Nachbrenner zugeordnet sein. Der Nachbrenner kann dabei ausschließlich zündfähige Bereiche besitzen, das heißt die Strömungskanäle im Nachbrenner haben entsprechend große Strömungsquerschnittsflächen, damit eine Entzündung eventuell noch vorhandener brennbarer Gemischanteile sichergestellt ist.

Vor dem primärseitigen Strömungseintritt der Brennervorrichtung ist vorzugsweise eine Mischkammer mit einer Zündeinrichtung angeordnet. Der Mischkammer wird beispielsweise ein flüssiger Brennstoff und Luft zugeführt, so dass in der Mischkammer ein Brennstoff-Luft-Gemisch entsteht. Mittels der Zündeinrichtung wird dieses Gemisch entzündet, bevor es zu den primärseitigen Strömungskanälen des Wärmetauschers gelangt.

Eine besonders bevorzugte Anwendung des erfindungsgemäßen Wärmetauschers besteht darin, diesen zur Temperaturerhöhung des Abgases einer Brennkraftmaschine eines Kraftfahrzeugs zu verwenden. Eine solche Erhöhung der Abgastemperatur ist für Abgasnachbehandlungssysteme oftmals erforderlich, damit diese eine möglichst gute Umwandlung der Schadstoffe in ungefährliche Abgasbestandteile durchführen können. Der Einsatz des Wärmetauschers kann somit bei Abgasnachbehandlungssystemen sehr vorteilhaft sein, wie beispielsweise in Verbindung mit SCR-Katalysatoren, die nach dem Prinzip der selektiven katalytischen Reduktion arbeiten. Der Wärmetauscher kann aber auch zur Erhöhung der Abgastemperatur in Verbindung mit Drei-Wege-Katalysatoren oder Partikelfiltern eingesetzt werden.

Bei einer derartigen Anwendung ist es sinnvoll, den Wärmetauscher in einem Abgaskanal einer Brennkraftmaschine derart anzuordnen, dass er vom Abgas umströmt wird. Damit werden Wärmeverluste in die Umgebung vermieden und gleichzeitig die Temperatur innerhalb der Brennervorrichtung abgesenkt, wodurch dessen thermische Belastung deutlich verringert wird. Wird das Abgas der Brennervorrichtung zudem stromauf von im Abgaskanal der Brennkraftmaschine angeordneten Abgasnachbehandlungssystemen, wie SCR-Katalysatoren, Drei-Wegekatalysatoren oder Partikelfiltern zurückgeführt, ermöglicht dies zusätzlich die in der Brennervorrichtung gebildeten Schadstoffe, wie Kohlenmonoxid, Kohlenwasserstoffe, Russ oder $NO_x$, zu vermindern.

Die primärseitigen und sekundärseitigen Kanäle des Wärmetauschers können in besonders einfacher Weise durch Metallfolien gebildet sein, die mit entsprechenden Abständen zueinander die gewünschten Strömungsquerschnittsflächen ergeben. Die Metallfolien können auch durch entsprechende Formgebung als abgewinkelte oder gewellte Metallfolien ausgeführt sein. So kann zum Beispiel ein Kreuzstromwärmetauscher sehr einfach durch sich kreuzende, gewellte Metallfolien mit zusätzlichen glatten Zwischenlagen aufgebaut werden. Als Metallfolien können insbesondere zirkonoxidhaltige und/oder eisenhaltige und/oder chromhaltige und/oder aluminiumhaltige Metallfolien verwendet werden. Alternativ zum Einsatz von Metallfolien zur Ausbildung der Strömungskanäle besteht jedoch grundsätzlich auch die Möglichkeit, dass die Strömungskanäle wenigstens zum Teil durch eine zirkonoxidhaltige Keramik oder durch Siliciumcarbid (SiC) oder durch Aluminiumtitanat oder durch Mullit oder durch Cordierit gebildet sind.

Ferner wird die bevorzugte Anordnung eines erfindungsgemäßen Wärmetauschers in dem Abgaskanal einer Brennkraftmaschine beansprucht, wodurch sich die zuvor genannten Vorteile ergeben. Die Formulierung von Verfahrensansprüchen zum Betrieb des erfindungsgemäßen Wärmetauschers in Verbindung mit einer Anordnung desselben in einem Abgaskanal stromauf wenigstens eines Abgasnachbehandlungselementes behält sich die Anmelderin ausdrücklich vor.

Die Erfindung wird nachfolgend anhand von in der Zeichnung dargestellten Ausführungsbeispielen näher erläutert.

Es zeigen:

Fig. 1 den prinzipiellen Aufbau eines Wärmetauschers im Schnitt, eingesetzt in einen Abgaskanal einer Brennkraftmaschine,

Fig. 2 eine Anordnung von Strömungskanälen in der Brennervorrichtung eines Wärmetauschers,

Fig. 3 eine schematisierte Teilansicht des Aufbaus eines Wärmetauschers mit geraden Metallfolien als Kanalwände, und

Fig. 4 eine Teilansicht eines Wärmetauschers mit gewellten Kanalwänden und geraden Zwischenlagen als Kanalwände.

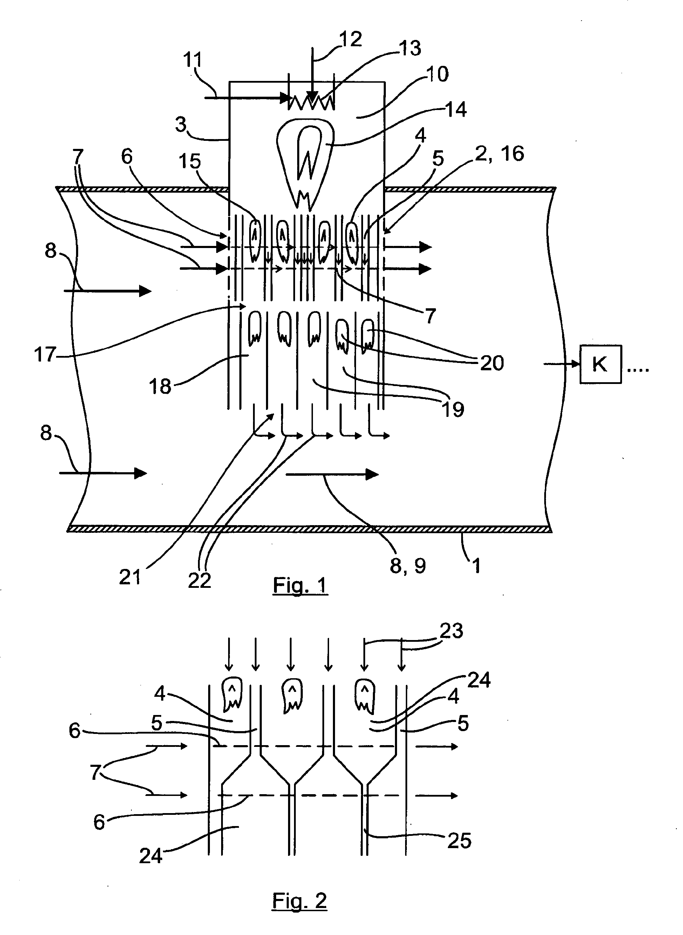

Figur 1 zeigt einen seitlich in einen Abgaskanal 1 hineinragenden Wärmetauscher 2, der Teil eines Brenners 3 ist. Der Wärmetauscher 2 ist hier beispielhaft als Kreuzstromwärmetauscher ausgebildet, der primärseitige Strömungskanäle 4 mit großer Strömungsquerschnittsfläche und primärseitige Strömungskanäle 5 mit kleiner Strömungsquerschnittsfläche aufweist. Die sekundärseitigen Kanäle 6 sind hier nicht im Detail sichtbar und kreuzen die primärseitigen Strömungskanäle 4, 5. Der durch die sekundärseitigen Kanäle 6 strömende Teil des Abgasstroms ist mit Richtungspfeilen 7 gekennzeichnet. Die Hauptströmungsrichtung des Abgasstroms im Abgaskanal 1 ist mit Richtungspfeilen 8 angegeben. Ein zusätzlich mit der Bezugszahl 9 gekennzeichneter Richtungspfeil deutet an, dass hier beispielhaft ein Teil der Abgasströmung nicht durch den Wärmetauscher 2 hindurchströmt.

Der Brenner 3 besitzt vor dem primärseitigen Eintrittsbereich des Wärmetauschers 2 eine Mischkammer 10, der über eine Zuleitung 11 ein flüssiger Brennstoff und über eine zweite Zuleitung 12 Luft zugeführt wird. Das dadurch in der Mischkammer 10 gebildete Brennstoff-Luft-Gemisch wird mittels einer Zündeinrichtung 13 gezündet, was die stilisiert dargestellte Flamme 14 veranschaulichen soll, allerdings wird der Brennstoff in diesem Bereich nur unvollständig verbrannt. Entsprechende Flammen 15 sind in den Strömungskanälen 4 mit größerer Strömungsquerschnittsfläche eingezeichnet, da dort eine weitere Verbrennung des Brennstoff-Luft-Gemischs erfolgt Dagegen erlischt die Flamme in den Strömungskanälen 5 mit sehr kleiner Strömungsquerschnittsfläche, da diese so beschaffen sind, dass hier die Pecletzahl unterhalb eines kritischen Wertes, etwa unterhalb von 65, liegt. In den zündfähigen Bereichen mit größerer Strömungsquerschnittsfläche liegt die Pecletzahl entsprechend oberhalb des kritischen Wertes von ca. 65. Die freie Strömungsquerschnittsfläche in den Strömungskanälen 5, 6 kann beispielsweise zwischen 0,15 mm$^2$ und 25 mm$^2$ liegen.

Die Strömungskanäle 4, 5 und auch die kreuzweise zu diesen angeordneten Kanäle 6 können aus geraden oder geformten Metallfolien hergestellt sein, wobei die primärseitigen Strömungskanäle 4, 5 vorzugsweise aus Metallfolien bestehen, die wenigstens an ihrer Oberfläche ein katalytisches Material aufweisen können. Dieses katalytische Material dient dazu, dass in den Strömungskanälen 4 eine Oxidation des Brennstoff-Luft-Gemischs und somit eine Verbrennung des durchströmenden Brennstoff-Luft-Gemischs begünstigt wird. Die primärseitigen Strömungskanäle 4, 5 können somit als eine Brennervorrichtung 16 bezeichnet werden, die einen Brennraum bildet und die Teil des Wärmetauschers 2 ist.

An den Gasaustrittsbereich 17 der Brennervorrichtung 16 schließt sich ein Nachverbrenner bzw. Nachbrenner 18 an, dessen Strömungskanäle 19 jeweils so große Strömungsquerschnittsflächen haben, dass eine Zündung bzw. Verbrennung des durchströmenden Gemischs erfolgt, soweit dieses noch brennbare Gemischbestandteile aufweist. Die Nachverbrennung ist in der Zeichnung mit weiteren stilisierten Flammen 20 veranschaulicht.

Die Austrittsöffnung 21 des Nachbrenners 18 mündet in den Abgaskanal 1, so dass das austretende Gas entsprechend den abgewinkelten Pfeilrichtungen 22 mit der Abgasströmung in Pfeilrichtung 8 mitgenommen wird.

Die Innenwände der primärseitigen Strömungskanäle 4, 5 können mit einem katalytischen Material, insbesondere Cer, Nickel, Palladium, Platin, Osmium, Rhodium, Iridium, Gold oder Silber beschichtet oder aus einem solchen hergestellt sein, so dass sich das hier beispielhaft seitlich einströmende Brennstoff-Luft-Gemisch in den zündfähigen Kanalabschnitten leichter entzündet.

Die dargestellte Anordnung des Wärmetauschers 2 stellt sicher, dass die Temperatur innerhalb der Brennerstruktur abgesenkt werden kann, so dass die spezifische Leistung der Brennervorrichtung 16 bzw. des Wärmetauschers 2 erheblich angehoben werden kann, ohne eine thermische Schädigung der Bauteile zu verursachen. Durch die Abführung des Abgases aus der Brennervorrichtung 16 in den Abgastrakt bzw. Abgaskanal 1 der Brennkraftmaschine stromauf wenigstens eines Abgasnachbehandlungselementes (in Figur 1 schematisch und symbolisch durch das Bezugszeichen K dargestellt), das zum Beispiel durch wenigstens einen Drei-Wege-Katalysator und/oder wenigstens einen Dieseloxidationskatalysator und/oder wenigstens einen Partikelfilter und/oder wenigstens einen SCR-Katalysator gebildet ist, kann dieses auf Arbeitstemperatur angehoben und können gleichzeitig die in der Brennervorrichtung 16 gebildeten Schadstoffe, wie $NO_x$, CO und Kohlenwasserstoffe, vermindert werden. Die Steuerung bzw. Regelung erfolgt hier zum Beispiel über eine nicht dargestellte Steuer- und/oder Regeleinrichtung.

Figur 2 zeigt den prinzipiellen Aufbau einer besonders bevorzugten Ausführungsform der Strömungskanäle 4, 5 eines Wärmetauschers 2, wie er in Figur 1 gezeigt ist, jedoch sind hier die Strömungskanäle 4, 5 in Strömungsrichtung 23 mit einer sich ändernden Strömungsquerschnittsfläche ausgestattet. Dabei kann das in Strömungsrichtung 23 hindurchströmende brennbare Gemisch in den Bereichen 24 mit größerer Strömungsquerschnittsfläche brennen bzw. sich entzünden, während in den Bereichen 25 mit sehr kleiner Strömungsquerschnittsfläche eine Verbrennung bzw. Zündung nicht möglich ist. Auf diese Weise wird eine lokal begrenzte Oxidation des Brennstoffs vermieden; vielmehr wird die Verbrennung gezielt über das Bauteil verteilt und damit die effektive Wärmetauscherfläche vergrößert bzw. werden die lokal auftretenden Temperaturen abgesenkt. Auch hier können in mehreren Lagen übereinander kreuzend zu den Strömungskanälen 4, 5 sekundärseitige Kanäle 6 angeordnet sein, durch die das zu erwärmende Abgas in Pfeilrichtung 7 hindurchströmen kann.

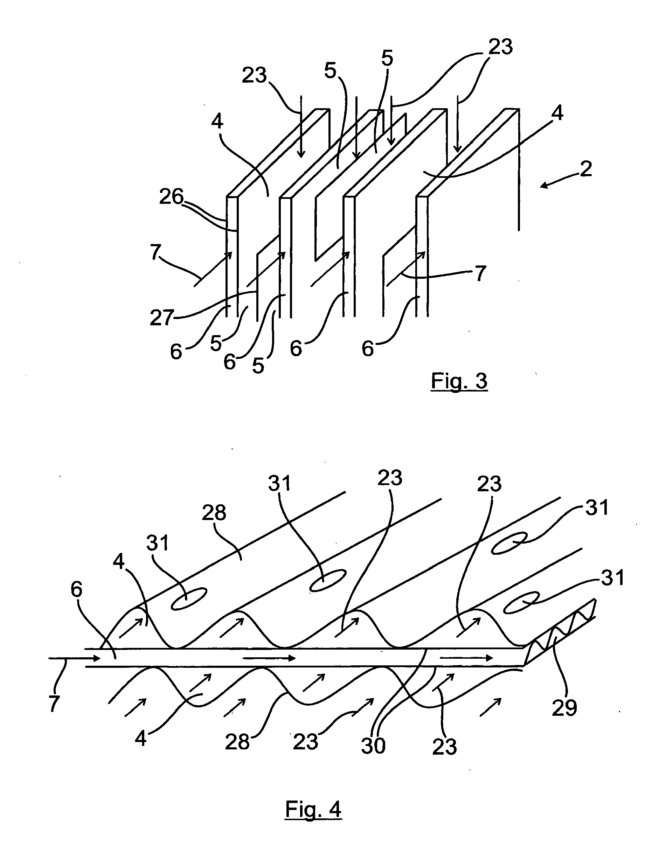

Die in Figur 1 und in Figur 2 verwendeten Wärmetauscher sind bevorzugt als Kreuzstromwärmetauscher ausgebildet. Ein solcher Kreuzstromwärmetauscher kann auch einen Aufbau haben, wie er in Figur 3 in einer Teilansicht gezeigt ist. Mehrere zum Teil unterschiedlich große Metallfolien 26, 27 bilden primärseitige Strömungskanäle 4, 5 und sekundärseitige Kanäle 6 des Wärmetauschers 2. Die primärseitigen Strömungskanäle mit großer Strömungsquerschnittsfläche sind mit der Bezugszahl 4, die mit kleiner Strömungsquerschnittsfläche mit der Bezugszahl 5 bezeichnet. Durch diese Ausführung werden Bereiche mit Pecletzahlen ausgebildet, die eine Zündung gewährleisten und solche, die eine Zündung vermeiden. Wie bereits oben beschrieben, führt dies zu einer Verteilung von brennbaren Bereichen über den Wärmetauscher.

Die sekundärseitigen Kanäle 6 zur Durchleitung des zu erhitzenden Abgases werden von diesem in Pfeilrichtung 7 durchströmt. Dagegen geben die Richtungspfeile 23 die primärseitige Strömungsrichtung des zugeführten Brennstoff-Luft-Gemischs aus der Mischkammer 10 (Fig. 1) an.

Der in Figur 3 dargestellte Wärmetauscher 2 kann wie bei der Anordnung von Figur 1 ebenfalls in einen Brenner 3 integriert sein, wie der dort verwendete Wärmetauscher 2.

Ein Kreuzstromwärmetauscher kann auch gemäß Figur 4 aus sich kreuzenden Lagen von gewellten Metallfolien 28, 29 bestehen, wobei gerade Metallfolien 30 die primärseitigen und die sekundärseitigen Kanäle trennen. Im dargestellten Ausführungsbeispiel ist ein sekundärseitiger Kanal 6 kreuzend zu primärseitigen Strömungskanälen 4 angeordnet. Der Richtungspfeil 7 gibt die Strömungsrichtung eines im Wärmetauscher zu erhitzenden Mediums an, während die Pfeilrichtungen 23 die Strömungsrichtung des Brennstoff-Luft-Gemischs oder eines anderen brennbaren Gemischs angeben.

Die gewellte Metallfolie 28 ist in Figur 4 außerdem mit Durchbrüchen 31 versehen, die im Bereich der Durchbrüche 31 eine Vergrößerung der Strömungsquerschnittsfläche ergeben, so dass dort zündfähige Bereiche mit hohen Pecletzahlen entstehen, während in den übrigen Bereichen, also innerhalb der Strömungskanäle eine Zündung auf Grund zu geringer Pecletzahlen nicht stattfinden kann.

Werden mehrere Lagen der Metallfolienanordnung, wie diese in Figur 4 dargestellt ist, übereinander geschichtet, so ergibt sich dadurch eine dicht gepackte Struktur für einen Wärmetauscher mit einer durch die primärseitigen Strömungskanäle 4 gebildeten integrierten Brennervorrichtung.

Die Strömungskanäle sind vorzugsweise aus zirkonoxidhaltigen und/oder eisenhaltigen und/oder chromhaltigen und/oder aluminiumhaltigen Metallfolien gebildet, jedoch kann auch ein anderes Substrat, insbesondere ein katalytisch wirksames Substrat oder ein katalytisch beschichtetes Substrat, eingesetzt werden. Beispielsweise kann SiC, Aluminiumtitanat, Mullit oder Cordierit verwendet werden.

Durch die Verwendung von zirkonoxidhaltigen Materialien ergibt sich der Vorteil, dass die Schmelztemperatur der Struktur auf über 1300° C angehoben werden kann.

Zuvor wurde die Erfindung beispielhaft in Verbindung mit der bevorzugten Anwendung beschrieben, bei der das zu erhitzende Medium ein Abgas einer Brennkraftmaschine ist, um zum Beispiel dessen Abgastemperatur anzuheben. Bei dem im Wärmetauscher zu erhitzenden Medium kann es sich aber alternativ auch um Wasser zum Betrieb einer Dampfturbine oder um Brauchwasser oder um Luft oder ein anderes Gas, insbesondere zur Vorwärmung einer Hochtemperaturbrennstoffzelle und/oder eines Reformers, handeln.

**Patentansprüche**

1. Wärmetauscher mit primärseitigen Strömungskanälen (4, 5), die ein erhitztes Medium durchströmt, und mit sekundärseitigen Kanälen (6), die thermisch mit den primärseitigen Strömungskanälen (4, 5) gekoppelt sind und die ein zu erhitzendes Medium durchströmt, insbesondere zur Anhebung der Abgastemperatur des Abgases einer Brennkraftmaschine, wobei die primärseitigen Strömungskanäle (4, 5) einen Brennraum einer Brennervorrichtung (16) bilden, in dem ein hindurchströmendes Brennstoff-Luft-Gemisch oder ein anderes brennbares Gemisch oxidiert **dadurch gekennzeichnet, dass** ein Teil der primärseitigen Strömungskanäle (4, 5) eine so große Strömungsquerschnittsfläche hat, dass dort eine Entzündung des durchströmenden brennbaren Gemischs erfolgt, während der andere Teil der primärseitigen Strömungskanäle (4, 5) eine so kleine Strömungsquerschnittsfläche hat, dass dort eine Entzündung oder Verbrennung des durchströmenden brennbaren Gemischs nicht möglich ist.

2. Wärmetauscher nach Anspruch 1, **dadurch gekennzeichnet, dass** die Brennervorrichtung (16) Strömungskanäle (4, 5) aufweist, die wenigstens an ihrer Oberfläche ein katalytisches Material, insbesondere Cer und/oder Nickel und/oder Palladium und/oder Platin und/oder Osmium und/oder Rhodium und/oder Iridium und/oder Gold und/oder Silber, aufweisen.

3. Wärmetauscher nach einem der Ansprüche 1 oder 2, **dadurch gekennzeichnet, dass** wenigstens ein Teil der Wände der primärseitigen Strömungskanäle (4, 5) wenigstens einen Teil der Wände der sekundärseitigen Kanäle (6) bilden.

4. Wärmetauscher nach einem der vorhergehenden Ansprüche, **dadurch gekennzeichnet, dass** der Wärmetauscher (2) ein Kreuzstromwärmetauscher ist, bei dem sich die Strömungskanäle (4, 5) der Brennervorrichtung (16) mit den sekundärseitigen Kanälen (6) kreuzen.

5. Wärmetauscher nach einem der vorhergehenden Ansprüche, **dadurch gekennzeichnet, dass** die Strömungskanäle (4, 5) der Brennervorrichtung (16) und die sekundärseitigen Kanäle (6) abwechselnd zu einer geschichteten Struktur zusammengesetzt sind.

6. Wärmetauscher nach einem der vorhergehenden Ansprüche, **dadurch gekennzeichnet, dass** zündfähige Bereiche und nicht zündfähige Bereiche in der Brennervorrichtung (16) in Strömungsrichtung des durchströmenden brennbaren Gemischs nebeneinander und/oder hintereinander angeordnet sind.

7. Wärmetauscher nach einem der vorhergehenden Ansprüche, **dadurch gekennzeichnet, dass** in Strömungsrichtung des brennbaren Gemischs hinter der Brennervorrichtung (16) ein Nachbrenner (18) angeordnet ist, wobei bevorzugt vorgesehen ist, dass der Nachbrenner (18) ausschließlich zündfähige Strömungskanäle (19) aufweist.

8. Wärmetauscher nach einem der vorhergehenden Ansprüche, **dadurch gekennzeichnet, dass** zur Zufuhr und zur Entzündung des brennbaren Gemischs vor der Brennervorrichtung (16) eine Mischkammer (10) mit einer Zündeinrichtung (13) angeordnet ist.

9. Wärmetauscher nach einem der vorhergehenden Ansprüche, **dadurch gekennzeichnet, dass** der Wärmetauscher (2) in den Abgaskanal (1) einer Brennkraftmaschine zur Temperaturerhöhung des Abgases dergestalt eingesetzt ist, dass das Abgas der Brennkraftmaschine als sekundärseitiges Medium wenigstens teilweise die sekundärseitigen Kanäle (6) des Wärmetauschers (2) durchströmt.

10. Wärmetauscher nach einem der Ansprüche 1 bis 8, **dadurch gekennzeichnet, dass** es sich bei dem durch den Wärmetauscher zu erhitzenden Medium um Wasser zum Betrieb einer Dampfturbine oder um Brauchwasser oder um Luft oder ein anderes Gas, insbesondere zur Vorwärmung einer Hochtemperaturbrennstoffzelle und/oder eines Reformers, handelt.

11. Wärmetauscher nach einem der vorhergehenden Ansprüche, **dadurch gekennzeichnet, dass** sich das aus der Brennervorrichtung (16) austretende Gas mit dem sekundärseitigen, zu erhitzenden Medium vermischt.

12. Wärmetauscher nach einem der vorhergehenden Ansprüche, **dadurch gekennzeichnet, dass** die primärseitigen und sekundärseitigen Kanäle (4, 5, 6) durch Metallfolien, insbesondere durch zirkonoxidhaltige und/oder eisenhaltige und/oder chromhaltige und/oder aluminiumhaltige Metallfolien, gebildet sind oder dass die primärseitigen und sekundärseitigen Kanäle (4, 5, 6) durch eine Keramik, insbesondere durch eine zirkonoxidhaltige Keramik oder SiC oder Aluminiumtitanat oder Mullit oder Cordierit gebildet sind.

13. Wärmetauscher nach einem der vorhergehenden Ansprüche, **dadurch gekennzeichnet, dass** der Wärmetauscher (2) aus kreuzweise übereinandergestapelten gewellten Metallfolien (28, 29) und glatten Metallfolien (30) als Zwischenlagen aufgebaut ist.

14. Anordnung eines Wärmetauschers nach einem der Ansprüche 1 bis 13 in einem Abgaskanal (1) einer Brennkraftmaschine, insbesondere einer Brennkraftmaschine eines Fahrzeuges, wobei der Wärmetauscher (2) im Abgaskanal (1) stromauf wenigstens eines Abgasnachbehandlungselementes, insbesondere eines Drei-Wege-Katalysators und/oder eines Dieseloxidationskatalysators und/oder eines Partikelfilters und/oder eines SCR-Katalysators, angeordnet ist, dergestalt, dass die Abgase aus der Brennervorrichtung (16) stromauf wenigstens eines Abgasnachbehandlungselementes (K) oder stromauf des wenigstens eines Abgasnachbehandlungselementes (K) in den Abgaskanal (1) einströmen, insbesondere dergestalt mittels einer Steuer- und/oder Regeleinrichtung gesteuert und/oder geregelt in den Abgaskanal (1) einströmen, dass wenigstens eines der Abgasnachbehandlungselemente (K) oder das wenigstens eine Abgasnachbehandlungselement (K) auf eine vorgegebene Arbeitstemperatur angehoben wird und/oder die in der Brennervorrichtung gebildeten Schadstoffe vermindert werden.

## Claims

1. A heat exchanger having primary-side flow ducts (4, 5), through which a heated medium flows, and having secondary-side ducts (6), which are thermally coupled to the primary-side flow ducts (4, 5) and through which a medium to be heated flows, in particular for increasing the exhaust-gas temperature of the exhaust gas of an internal combustion engine, wherein the primary-side flow ducts (4, 5) form a combustion chamber of a burner apparatus (16), in which combustion chamber a throughflowing fuel-air mixture or some other combustible mixture is oxidized, **characterized in that** a part of the primary-side flow ducts (4, 5) has such a large flow cross-sectional area that ignition of the throughflowing combustible mixture takes place there, whereas the other part of the primary-side flow ducts (4, 5) has such a small flow cross-sectional area that ignition or combustion of the throughflowing combustible mixture is not possible there.

2. The heat exchanger according to Claim 1, **characterized in that** the burner apparatus (16) has flow ducts (4, 5) which, at least on their surface, have a catalytic material, in particular cerium and/or nickel and/or palladium and/or platinum and/or osmium and/or rhodium and/or iridium and/or gold and/or silver.

3. The heat exchanger according to either of Claims 1 and 2, **characterized in that** at least a part of the walls of the primary-side flow ducts (4, 5) forms at least a part of the walls of the secondary-side ducts (6).

4. The heat exchanger according to one of the preceding claims, **characterized in that** the heat exchanger (2) is a cross-current heat exchanger in which the flow ducts (4, 5) of the burner apparatus (16) run crosswise in relation to the secondary-side ducts (6).

5. The heat exchanger according to one of the preceding claims, **characterized in that** the flow ducts (4, 5) of the burner apparatus (16) and the secondary-side ducts (6) are placed together in alternation so as to form a layered structure.

6. The heat exchanger according to one of the preceding claims, **characterized in that** ignitable regions and non-ignitable regions in the burner apparatus (16) are arranged adjacent to one another and/or one behind the other in the flow direction of the throughflowing combustible mixture.

7. The heat exchanger according to one of the preceding claims, **characterized in that** a follow-up burner (18) is arranged downstream of the burner apparatus (16) as viewed in the flow direction of the combustible mixture, wherein it is preferably provided that the follow-up burner (18) has exclusively ignitable flow ducts (19).

8. The heat exchanger according to one of the preceding claims, **characterized in that**, for the feed and ignition of the combustible mixture, a mixing chamber (10) with an ignition device (13) is arranged upstream of the burner apparatus (16).

9. The heat exchanger according to one of the preceding claims, **characterized in that** the heat exchanger (2) is inserted into the exhaust-gas duct (1) of an internal combustion engine, in order to increase the temperature of the exhaust gas, in such a way that the exhaust gas of the internal combustion engine, as secondary-side medium, flows at least partially through the secondary-side ducts (6) of the heat exchanger (2).

10. The heat exchanger according to one of Claims 1 to 8, **characterized in that** the medium to be heated by the heat exchanger is water for the operation of a steam turbine or is process water or air or another gas, in particular for preheating a high-temperature fuel cell and/or a reformer.

11. The heat exchanger according to one of the preceding claims, **characterized in that** the gas emerging from the burner apparatus (16) mixes with the secondary-side medium to be heated.

12. The heat exchanger according to one of the preceding claims, **characterized in that** the primary-side and secondary-side ducts (4, 5, 6) are formed by metal foils, in particular by metal foils containing zirconium oxide and/or iron and/or chromium and/or aluminium, or **in that** the primary-side and secondary-side ducts (4, 5, 6) are formed by a ceramic, in particular by a ceramic containing zirconium oxide or by SiC or aluminium titanate or mullite or cordierite.

13. The heat exchanger according to one of the preceding claims, **characterized in that** the heat exchanger (2) is constructed from corrugated metal foils (28, 29), stacked one on top of the other in crosswise fashion, and smooth metal foils (30) as intermediate layers.

14. An arrangement of a heat exchanger according to one of Claims 1 to 13 in an exhaust-gas duct (1) of an internal combustion engine, in particular of an internal combustion engine of a vehicle, wherein the heat exchanger (2) is arranged in the exhaust-gas duct (1) upstream of at least one exhaust-gas aftertreatment element, in particular a three-way catalytic converter and/or a diesel oxidation catalytic converter and/or a particle filter and/or an SCR catalytic converter, in such a way that the exhaust gases from the burner apparatus (16) flow, upstream of at least one exhaust-gas aftertreatment element (K) or upstream of the at least one exhaust-gas aftertreatment element (K), into the exhaust-gas duct (1), in particular into the exhaust-gas duct (1) in a manner controlled and/or regulated by means of a control and/or regulation device such that at least one of the exhaust-gas aftertreatment elements (K) or the at least one exhaust-gas aftertreatment element (K) is heated to a predefined working temperature and/or the pollutants formed in the burner apparatus are reduced.

**Revendications**

1. Échangeur de chaleur comprenant des canaux d'écoulement du côté primaire (4, 5), qui sont traversés par un milieu chauffé, et comprenant des canaux du côté secondaire (6), qui sont accouplés thermiquement aux canaux d'écoulement du côté primaire (4, 5) et qui sont traversés par un milieu à chauffer, en particulier pour augmenter la température de gaz d'échappement du gaz d'échappement d'un moteur à combustion interne, les canaux d'écoulement du côté primaire (4, 5) formant une chambre de combustion d'un dispositif de brûleur (16), dans laquelle un mélange air-carburant en circulation ou un autre mélange combustible s'y oxyde, **caractérisé en ce qu'**une partie des canaux d'écoulement du côté primaire (4, 5) présente une surface d'écoulement en section transversale suffisamment grande pour qu'un allumage du mélange combustible en circulation s'y produise, tandis que l'autre partie des canaux d'écoulement du côté primaire (4, 5) présente une surface d'écoulement en section transversale suffisamment petite pour qu'un allumage ou une combustion du mélange combustible en circulation n'y soit pas possible.

2. Échangeur de chaleur selon la revendication 1, **caractérisé en ce que** le dispositif de brûleur (16) présente des canaux d'écoulement (4, 5) qui, au moins au niveau de leur surface, présentent un matériau catalytique, en particulier du cérium et/ou du nickel et/ou du palladium et/ou du platine et/ou de l'osmium et/du rhodium et/ou de l'iridium et/ou de l'or et/ou de l'argent.

3. Échangeur de chaleur selon l'une quelconque des revendications 1 ou 2, **caractérisé en ce qu'**au moins une partie des parois des canaux d'écoulement du côté primaire (4, 5) forme au moins une partie des parois des canaux du côté secondaire (6).

4. Échangeur de chaleur selon l'une quelconque des revendications précédentes, **caractérisé en ce que** l'échangeur de chaleur (2) est un échangeur de chaleur à flux croisés, dans lequel les canaux d'écoulement (4, 5) du dispositif de brûleur (16) croisent les canaux du côté secondaire (6).

5. Échangeur de chaleur selon l'une quelconque des revendications précédentes, **caractérisé en ce que** les canaux d'écoulement (4, 5) du dispositif de brûleur (16) et les canaux du côté secondaire (6) sont assemblés en alternance pour former une structure en couche.

6. Échangeur de chaleur selon l'une quelconque des revendications précédentes, **caractérisé en ce que** des régions pouvant être allumées et des régions ne pouvant pas être allumées sont disposées les unes à côté des autres et/ou les unes derrière les autres dans le dispositif de brûleur (16) dans la direction d'écoulement du mélange combustible en circulation.

7. Échangeur de chaleur selon l'une quelconque des revendications précédentes, **caractérisé en ce que** dans la direction d'écoulement du mélange combustible derrière le dispositif de brûleur (16) est disposé un post-brûleur (18), le post-brûleur (18) étant de préférence prévu pour présenter exclusivement des canaux d'écoulement pouvant être allumés (19).

8. Échangeur de chaleur selon l'une quelconque des revendications précédentes, **caractérisé en ce que** pour l'alimentation et l'allumage du mélange combustible, une chambre de mélange (10) avec un dispositif d'allumage (13) est disposée avant le dispositif de brûleur (16).

9. Échangeur de chaleur selon l'une quelconque des revendications précédentes, **caractérisé en ce que** l'échangeur de chaleur (2) est inséré dans le canal de gaz d'échappement (1) d'un moteur à combustion interne en vue d'augmenter la température du gaz d'échappement de telle sorte que le gaz d'échappement du moteur à combustion interne s'écoule sous forme de milieu du côté secondaire au moins en partie à travers les canaux du côté secondaire (6) de l'échangeur de chaleur (2).

10. Échangeur de chaleur selon l'une quelconque des revendications 1 à 8, **caractérisé en ce que** le milieu à chauffer à travers l'échangeur de chaleur est de l'eau pour faire fonctionner une turbine à vapeur ou de l'eau de traitement ou de l'air ou un autre gaz, en particulier pour le préchauffage d'une pile à combustible à haute température et/ou d'un reformeur.

11. Échangeur de chaleur selon l'une quelconque des revendications précédentes, **caractérisé en ce que** le gaz sortant du dispositif de brûleur (16) se mélange au milieu à chauffer du côté secondaire.

12. Échangeur de chaleur selon l'une quelconque des revendications précédentes, **caractérisé en ce que** les canaux du côté primaire et du côté secondaire (4, 5, 6) sont formés par des films métalliques, en particulier par des films métalliques contenant de l'oxyde de zirconium et/ou contenant du fer et/ou contenant du chrome et/ou contenant de l'aluminium, ou **en ce que** les canaux du côté primaire et du côté secondaire (4, 5, 6) sont formés par une céramique, en particulier par une céramique contenant de l'oxyde de zirconium ou du SiC ou du titanate d'aluminium ou de la mullite ou de la cordiérite.

13. Échangeur de chaleur selon l'une quelconque des revendications précédentes, **caractérisé en ce que** l'échangeur de chaleur (2) est réalisé à partir de films métalliques ondulés (28, 29) et de films métalliques lisses (30) empilés les uns sur les autres sous forme croisée en tant que couches intermédiaires.

14. Agencement d'un échangeur de chaleur selon l'une quelconque des revendications 1 à 13 dans un canal de gaz d'échappement (1) d'un moteur à combustion interne, en particulier d'un moteur à combustion interne d'un véhicule, l'échangeur de chaleur (2) étant disposé dans le canal d'échappement (1) en amont d'au moins un élément de post-traitement de gaz d'échappement, en particulier d'un catalyseur à trois voies et/ou d'un catalyseur à oxydation diesel et/ou d'un filtre à particules et/ou d'un catalyseur SCR, de telle sorte que les gaz d'échappement provenant du dispositif de brûleur (16) en amont d'au moins un élément de post-traitement de gaz d'échappement (K) ou en amont de l'au moins un élément de post-traitement de gaz d'échappement (K) affluent dans le canal de gaz d'échappement (1), en particulier affluent dans le canal de gaz d'échappement (1) de manière commandée et/ou régulée au moyen d'un dispositif de commande et/ou de régulation de telle sorte qu'au moins l'un des éléments de post-traitement de gaz d'échappement (K) ou l'au moins un élément de post-traitement de gaz d'échappement (K) soient amenés à une température de travail prédéfinie et/ou que les substances toxiques formées dans le dispositif de brûleur soient réduites.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004049903 A1
- WO 9821523 A
- JP S603442 A
- DE 202007001754 U1